# EUROPEAN PATENT SPECIFICATION

(11) **EP 3 254 825 B1**
(45) Date of publication and mention of the grant of the patent: **14.11.2018**
(21) Application number: 17172913.0
(22) Date of filing: 25.05.2017
(51) Int. Cl.: B29C 49/06, B29C 49/12, B29C 49/28, B29C 49/42, B29C 49/48, B29C 49/64, B29K 67/00, B29L 31/00

(54) **MACHINE FOR MOULDING AND BLOW-MOULDING CONTAINERS OBTAINED FROM CORRESPONDING PARISONS OF A THERMOPLASTIC MATERIAL**
MASCHINE ZUM FORMEN UND BLASFORMEN VON BEHÄLTERN AUS KUNSTSTOFF VORFORMLINGEN.
MACHINE POUR MOULER ET SOUFFLER DES RÉCIPIENTS À PARTIR DE PRÉFORMES EN MATIÈRE PLASTIQUE.

(30) Priority: 06.06.2016 IT UA20164132
(43) Date of publication of application: 13.12.2017
(73) Proprietor: BVA S.r.l., 40064 Ozzano Dell'Emilia (BO) (IT)
(72) Inventor: ELMI, Stefano, 40050 Monte San Pietro (BO) (IT)
(74) Representative: Puggioli, Tommaso

(56) References cited:
- US-A- 2 974 362
- US-A- 6 082 991
- US-A1- 2015 084 243

## Description

This invention relates to a machine for the moulding and stretching-blowing of containers obtained from a thermoplastic material, using a blowing pressure and a mechanical stretching action on parisons of a thermoplastic material, in particular parisons made of PET (Polyethylene Terephthalate); these machines are also indicated with the acronym ISBM (*Injection Stretch Blow Moulding Machines*)*.* Blow-moulding is a particularly fast and efficient production process, suitable for the production of containers on a wide and specific scale, for example for drinks, pharmaceuticals, cosmetics, detergent products etc.

There are prior art machines which actuate this process and, according to a first subdivision, they can be grouped into two main types, with different operations and productivity. A first type, the so-called "two stage" type, because two distinct machines are required, is in effect suitable for the production of large numbers of containers stretched and blown on a blower, starting from parisons already obtained by means of a previous process on another machine for injection moulding, specifically set up; this results in the definition of "two stages".

The parisons are conveyed through different operating stations or machines, which perform certain operations until obtaining the containers. A second type of machine, the so-called "single stage", is on the other hand suitable for the production of smaller numbers of containers, and generally also comprises a section for making parisons starting from thermoplastic material in granular form. The containers are then produced in a single production step.

Single-stage machines carry out in succession the plasticising of the granules, for example of PET, the injection moulding of the parison, the conditioning of the parison and the stretching-blowing, that is to say, a biaxial expansion (in length and width) of the parison to obtain the container.

The basic constructional configuration of these machines may be classified according to a first model, defined as a "a rotary table", in general with hydraulic operation, and a second model defined as "linear". In the rotary table model the stations are distributed along a circumference and the parisons, made in the first station, are conveyed through the remaining stations along a circular path, by means of a rotary table, which supports them by suitable gripping devices thanks to a supporting ring (*neck-ring*), formed around the mouth.

The hydraulic machines with a configuration having a rotary table have some drawbacks.

Machines of similar technology and dimensions, since they are completely hydraulic, have in use hydraulic control units for the movements, with a capacity which varies from a minimum of 600 litres to a maximum of 1000 litres of oil, which, in addition to the regular changing and disposal of the oil, require a specific cooling unit for cooling the oil; this results in high energy consumption and the presence, in-situ, of sources of pollution.

In the hydraulic machines, as many devices for gripping the parisons must be provided as there are operating stations and four devices for supporting the corresponding devices are therefore usually necessary.

Moreover, the productivity of the machine decreases with the increase in size of the containers.

In addition to these problems there is the presence of greater mechanical stress on the parisons during the transfer from one station to the next, on account of longitudinal and also centrifugal accelerations.

The mechanical adjustment of the various stations is also difficult to balance and the leakage of hydraulic oil, which leaks from the devices located above the rotary table, may easily contaminate the product being processed. Further, the unit for indexing the rotary table relative to the stations constitutes a component of significant weight.

Lastly, the structure and the operating mode of the machine, which is sometimes rotary, operatively constrains the stations between each other, so much so that it is not possible to perform a variation on one station without influencing the other stations, making any adjustment or adaptation impossible.

More generally speaking, these types of machines are all equipped with dedicated moulds, which can only be used on the machines for which they have been produced and only for a specific type of container. In general, the machines therefore have fixed configurations, which prevent adjustments and which therefore cannot be adapted to different types of containers and sizes to be produced.

A further type of machine for moulding and stretch-blow-moulding is described in patent document US2015/084243A1.

The machine has the injection mould of the injection station and the blowing mould positioned longitudinally to the axis of the machine with the blowing mould having a number of blowing cavities less than the injection cavities of the injection mould.

In this way, the number of parisons which enter the blowing mould is lower than, in particular, half, the number of parisons produced in the injection moulding station.

In this type of machine, also referred to in the trade as "one and a half steps" the parisons of the same batch and which stand in air, aligned along a longitudinal direction, waiting to enter in the blowing mould, cool down.

The parisons which enter into the blowing mould do not all have, therefore, the same temperature causing serious difficulties in the processing and in the setting up of the machine.

In this context, the technical purpose which forms the basis of this invention is to overcome the above-mentioned drawbacks.

One aim of this invention is to provide a machine for moulding and stretching-blowing containers obtained from a thermoplastic material of the single-stage type, thus equipped with the injection moulding station for making the parisons, which is free of the drawbacks of prior art machines and which is capable of adapting easily to the various types of moulds and dimensions of the containers which must each time be produced.

More specifically, the aim of this invention is to provide a machine with a linear arrangement of the stations which is highly versatile, which can produce quantities which are relatively limited and adaptable to the moulds and containers of different types. The technical purpose and the above-mentioned aims are substantially achieved by a machine for moulding and blowing containers obtained from corresponding parisons of a thermoplastic material, in particular PET, comprising:
- an injection section, comprising a plasticising unit for melting the thermoplastic material, for obtaining the parisons by means of at least one injection moulding mould;
- a station for stretching-blowing the parisons, provided with at least one stretching-blowing mould having at least one moulding cavity, the stretching-blowing mould being movable to adopt cyclically a closed mould configuration and an open mould configuration, the stretching-blowing station comprising at least one stretching rod for each moulding cavity, movable to introduce progressively inside a relative parison positioned in the stretching-and-blowing mould, for axially deforming the parison to obtain a corresponding container;
- a system for transporting the parisons, formed in the injection section, for feeding in succession the parisons from the injection station to the conditioning station and to the stretching-blowing station; and a station for unloading the containers obtained; the stations for injecting, conditioning, stretching-blowing and unloading the containers are positioned relatively in such a way that the machine has a linear extension and a movement of the parisons between the stations occurs in a linear fashion, the mould for injection moulding being interchangeable as a function of the size of the parisons to be produced and the stretching-blowing mould being interchangeable according to the size of the containers to be produced. Further features and advantages of the invention are more apparent in the non-limiting description which follows of a preferred non-exclusive embodiment of a machine for the moulding and stretching-blowing of containers as illustrated in the accompanying drawings, in which:
   - Figure 1 shows a schematic perspective view of the machine according to the invention;
   - Figures 2 and 3 show perspective views in detail of two initial stations of the machine of Figure 1;
   - Figures 4 and 5 show, by way of an example, a parison and a carriage used for transporting the parisons;
   - Figures 6 and 7 show, respectively, two further operating stations for making the containers.

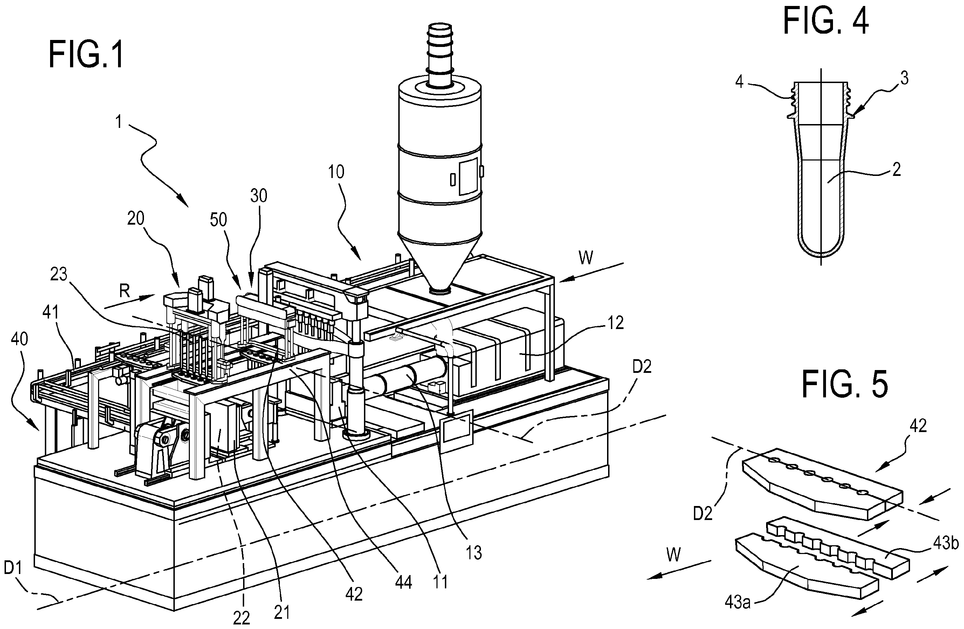

With reference the above-mentioned drawings, and in particular to Figure 1, the numeral 1 denotes in general the machine according to this invention. As may be inferred from the drawings, the machine 1 described, which is prepared for moulding, stretching and blowing containers obtained from a thermoplastic material, in particular PET, has a linear type arrangement of the operating stations.

The operating stations comprise, in the embodiment illustrated, an injection station 10, for preparing the parisons 2, a conditioning station 50, for conditioning the parisons, a stretching-blowing station 20 for biaxial expansion of the parisons to obtain the containers, a system for transporting the parisons 30 and a station 40 for unloading the containers obtained.

The stations 10, 50, 20 and 40 follow one another along a main longitudinal direction D1 of extension of the machine 1.

According to one aspect of this invention, all the above-mentioned stations and the systems, which will be described in more detail below, are actuated electrically.

The machine 1 comprises in its initial part a station 10 for injecting molten thermoplastic material, for obtaining parisons 2.

As illustrated, the parisons 2 are placed side by side along a direction D2 transversal to the main longitudinal direction D1 of extension of the machine 1.

In that way, it is possible to contain the overall longitudinal dimensions of the machine 1.

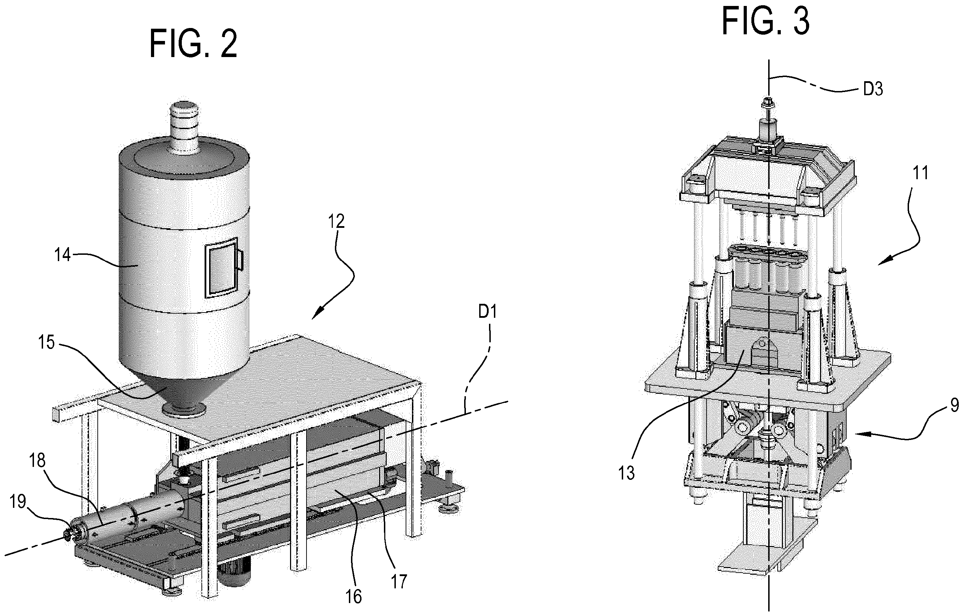

In more detail, and also with reference to Figures 2 and 3, the injection station 10 comprises a mould for injection moulding 11 and an injection-plasticising unit 12.

The mould 11 has a vertical direction D3 of action, at right angles to the directions D2 and D3.

The injection moulding mould 11 is preferably constructed with "hot-runner" (hot chamber hot) technology and comprises a pneumatically actuated shutter system 9.

The plasticising-injection unit 12, illustrated in particular in Figure 2, is equipped with a tank 14, designed for containing the thermoplastic material (for example PET) in granular form, located on top of a hopper 15, which leads to a heating appliance 16 provided for making the granular material plastic.

A front part of the plasticising-injection unit 12 comprises a conduit 18 in which rotates a screw feeder or screw 19 and which is connected with the base 13 of the mould 11 (Figures 2 and 3).

In the example illustrated, 5 parisons are formed (of which one is shown in Figure 4) placed side by side according to the direction D2.

In that sense, the mould 11 comprises a number of injection cavities, not illustrated, corresponding to the number of parisons to be produced.

It will be understood that the representation is presented merely by way of an example and without limiting the scope of the invention and that any number of parisons may be provided for the mould 11 without departing from the scope of the invention.

The injection station 10 also comprises self-adjusting means (not shown in the drawing) designed to actuate an automatic adaptation of a plurality of moulding parameters during the initial setting up of the machine. More specifically, the shape of the plasticising-injection unit 12 makes it possible to determine automatically the quantity of thermoplastic material to be introduced in the mould 11 and consequently dose the volume, the pressure and the time for moulding according to the size of the parison 2. This allows interchangeable moulds to be used for parisons 2 of different sizes.

Again with the aim of allowing the production of parisons with different dimensions, that is to say, to be able to mount moulds with different shapes and sizes, the plasticising-injection unit 12 has been made movable in height, between a first and a second end position, in such a way as to adapt to the mould for injection moulding 11 corresponding to the size of the parisons 2 to be produced. The plasticising-injection unit 12 is movable longitudinally, being mounted, for example, on a carriage 17, which allows the movement between a near position and a far position relative to the mould 11, and vice versa, in the longitudinal direction relative to the machine 1.

The movement in the longitudinal direction of the plasticising-injection unit 12 also achieves a further result, which consists in recovering the time necessary for a reloading of the screw 19 with the plasticised material. More in detail, the screw 19 is actuated for introducing in the injection moulding mould 11 only a first portion of the material necessary for a moulding cycle, for example corresponding to 2/3 of the total quantity. The missing part of the material, corresponding to 1/3 of the total quantity, is, on the other hand, introduced by moving the carriage 17 from the far position to the near position, that is to say, towards the mould 11, whilst the screw 19 is recharged with the material for the next cycle.

In this manner, unproductive waiting times for the reloading of the screw 19 are avoided, which, are on the other hand, are times which could be used to complete the introduction of the thermoplastic material by a movement of the carriage towards the injection moulding mould 11.

Once the parisons 2 have been obtained, they are delivered to a series of carriages 42, visible in Figure 5.

The carriages 42 each comprise two parts 43a, 43b coupled and separable between which the parisons 2 remain clamped in the area of a respective neck, inside a supporting ring or "neck-ring" 3, formed around the mouth, comprising, sometimes, a thread 4 for fitting a closure cap not illustrated.

The carriages 42 are movable in a straight line during a forward stroke along the direction D1 in a direction W, from the injection station 10 to the to the unloading station 40, and during a return stroke, for example along a parallel path, in the opposite return direction R, thus obtaining a linear movement of the parisons.

The carriages 42 are driven by suitable means, not illustrated since of substantially known type, along corresponding guides 44, schematically indicated in Figure 1. The machine 1 comprises a station for conditioning 50 the parisons positioned downstream of the injection station 10 along the longitudinal extension of the machine.

According to known techniques, the conditioning is performed using a suitable conditioning mould 51 substantially comprising a heating device provided for thermally conditioning the plastic material of the parisons 2 to a temperature greater than the vitreous transition temperature (tg).

More in detail, the thermal conditioning mould 51 is able to impart to the parisons 2 an optimum temperature profile for the subsequent blowing process.

Advantageously, this heating is actuated by strip electrical resistors, by a plurality of female elements 52, with a shape and size such that it can house inside it the parisons, designed to rise towards the parisons 2, and a plurality of male elements 53, with a shape and size such as to be able to introduce in the parisons, designed, on the other hand, to lower towards the parisons 2.

The female 52 and the male elements 53 are respectively carried by a first carrier unit 55 and by a second carrier unit 56, movable towards, and away from, according to the direction D3, a contact crosspiece 54.

The carrier units 55 and 56 move until making contact with the contact crosspiece 54. The first 55 and second 56 carrier units may be, for example, pneumatically driven.

The parisons, on the other hand, are maintained at a transfer height carried by the carriages 42 in such a way as to be wrapped outside by the female elements 52 and heated inside by the male elements 53, without any stress being transmitted to them which causes the deformation.

Once the parisons 2 have been conditioned, they are conveyed by the carriages 52 to the subsequent stretching-blowing station 20, in which there is a stretching-blowing mould 21.

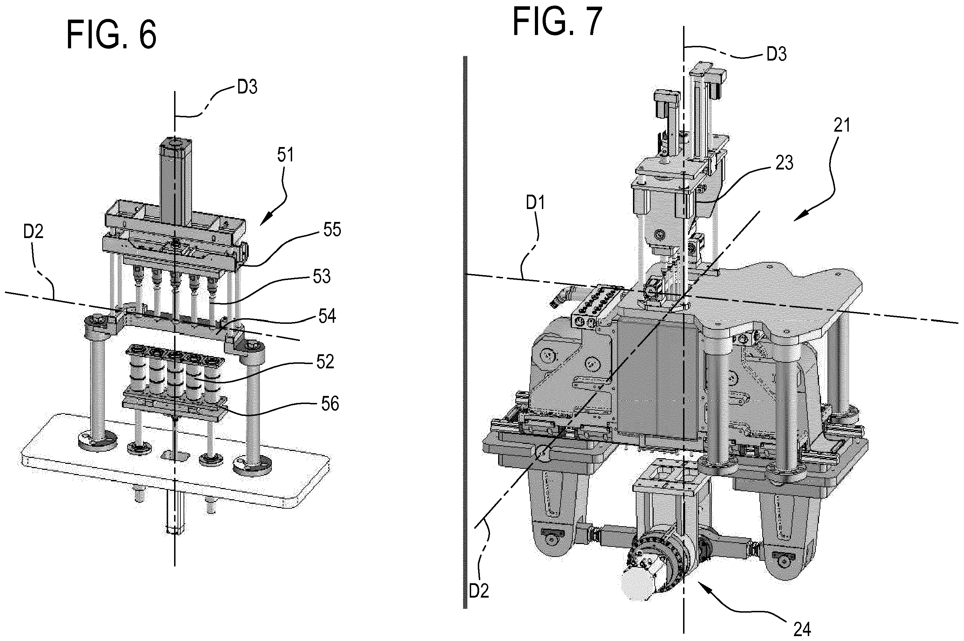

The mould 21, shown in particular in Figure 7, comprises several parts which, when coupled, define one or more cavities 22 for forming or blowing, for example five in the case of the example illustrated here, shown in Figure 1; however, another number of cavities may be provided without departing from the scope of the invention.

The parts which constitute the mould for stretching-blowing 21 are movable to adopt cyclically a closed mould configuration, in which the stretching and blowing process of the container is performed, and an open mould configuration, shown in Figure 1, to perform the removal of the containers formed and not illustrated.

For the movement of the movable parts of the mould 21, there is an actuating system 24 configured to adapt the opening stroke and the closing stroke of the separate parts to the dimensions of the mould 21.

This allows the mould 21 to be replaced on the machine 1 to obtain containers of different dimensions. The actuation system is adjusted each time according to the dimensions of the stretching-and-blowing mould mounted, these dimensions depending on the dimensions and the number of containers which the mould 21 can produce for each stretching-blowing cycle, in practice corresponding to the number of cavities 22.

The stretching-blowing station 20 also comprises stretching rods 23, which are prepared equal in number to the number of cavities 22 of the mould, that is to say, one stretching rod 23 for each moulding cavity 22.

The stretching rods 23 are movable along the direction D3 for inserting progressively into the respective parisons 2 positioned in the cavities 22 of the stretching-blowing mould 21, in order to deform the parisons themselves axially, along D3, during the simultaneous introduction of air under pressure, so as to obtain corresponding containers.

The machine 1, that is to say, the mould 21, comprises a number of cavities 22 for the blowing and stretching equal to the number of the injection cavities in the injection moulding mould 11.

According to an advantageous aspect of the invention, in the stretching-blowing station 20 there is also a plurality of blowing valves with discharge air recovery. The air discharged is recovered and introduced again into the pneumatic circuit and re-used for the movements. This feature makes it possible to obtain a substantial energy saving. Integrated in the stretching-blowing station 20 of the machine 1 is also the station 40 for unloading the containers produced, which at the end of the stretching-blowing cycle, with the stretching-blowing mould 21 open, extracts the containers produced and moves them away by a conveyor belt 41 towards an end-of-line, for example equipped with a device for palletising not illustrated.

In the station 40 the blow-moulded containers are picked up directly inside the blowing mould 21, for example with an electrical Cartesian *pick & place* system, and positioned on the conveyor belt 41.

The fact that the unloading station 40 is in practice integrated with the stretch-blowing station 20 makes it possible to reduce the operating stations to three, compared with the four stations usually provided on the single-stage stretch-blowing machines.

Other advantages of the machine according to this invention are apparent from what is described above.

The system 30 for transport of the parisons 2 extends in a straight line following the linear arrangement of the injection 10, conditioning 50, stretching-blowing 20 and unloading 40 stations, in such a way that the machine has a linear extension and the movement of the parisons between the stations occurs in a linear fashion. This simplifies substantially the construction of the machine and its operation, eliminating centrifugal forces which can lead to radial stresses on the parisons during their transfer.

The linear configuration together with the electric movement of the components allows the simple and easy replacement of the interchangeable parts, in particular of the moulds, allowing a quick and easy adaptation of the machine to different sizes of containers to be produced.

These features applied to an integrated single-stage system give the machine a high versatility.

A greater versatility makes it possible to modify in real time the production parameters, adjusting them rapidly and effectively to the requirements for production of the containers, allowing the process conditions for producing finished containers to be optimised with the best features. The linear configuration of the machine also allows a better access to the parts which make up the machine, thus improving also the maintenance operations, as it is possible to intervene rapidly to resolve any problems and in complete safety for the operators. The absence of hydraulic actuators and the use of electrical and/or pneumatic actuators for moulding the parisons allows an easy integration of the moulding part of the parisons with the stretching-blowing part of the containers. This makes it possible to compact enormously the plant, but especially to guarantee and ensure the absence of potential contaminants, such as hydraulic oil, from the entire plant, with advantages in terms of maximum hygiene.

## Claims

1. A machine for moulding, drawing and blow-moulding containers obtained from corresponding parisons of a thermoplastic material, in particular PET, the machine comprising:
- a station (10) for injecting molten thermoplastic material to obtain the parisons (2) placed side by side according to a direction (D2) transversal to a longitudinal direction (D1) of main extension of the machine, using at least one mould for injection moulding (11) comprising a plasticising-injection unit (12);
- a station (20) for stretching-blowing the parisons placed side by side according to a direction (D2), provided with at least one stretching-blowing mould (21) having a plurality of moulding cavities (22) each for a corresponding parison (2), placed side by side according to a transversal direction (D2), the stretching-blowing mould (21) being movable to adopt cyclically a closed mould configuration and an open mould configuration, the stretching-blowing station (20) comprising at least one stretching rod (23) for each moulding cavity (22), movable to introduce progressively inside a relative parison (2) positioned in the stretching-and-blowing mould (21), for axially deforming the parison to obtain a corresponding container;
- a system (30) for transporting the parisons (2) made in the injecting section (10) for feeding in succession the parisons (2) from the injection station (10) to the stretching-blowing station (20); and
- a station (40) for unloading the containers obtained;
the stations for injecting (10), stretching-blowing (20) and unloading the containers (40) being relatively positioned in such a way that the machine has a linear extension along the longitudinal direction (D1) and a linear movement of the parisons (2) between the stations, the machine being **characterised in that** the injection moulding mould (11) is interchangeable according to the size of the parisons (2) to be produced and the stretching-blowing mould (21) is interchangeable according to the dimensions of the containers to be produced.

2. The machine according to claim 1, wherein the plasticising-injection unit (12) comprises a system for loading the thermoplastic material in the injection moulding mould (11) which is able to determine the quantity of thermoplastic material to be introduced in the injection moulding mould (11) and consequently dose the pressure for moulding according to the size of the parisons (2).

3. The machine according to claim 1 or 2, wherein the plasticising-injection unit (12) is movable in height between a first and a second end position, in such a way as to adapt to the injection moulding mould (11) corresponding to the format of the parisons (2), the injection station (10) comprising self-adjusting means designed to actuate an automatic adaptation of a plurality of moulding parameters during an initial setting up of the machine (1).

4. The machine according to any one of the preceding claims, comprising a system (18, 19) for injecting thermoplastic material comprising a screw (19) rotating inside an injection conduit (18) for introducing in the injection moulding mould (11) a first portion of the material necessary for a moulding cycle and a carriage (17), supporting the injection system (18, 19), movable relative to the injection moulding mould (11) between a close position and a far position and vice versa, a second portion of the material necessary to complete an introduction of the material in the injection moulding mould (11) being introduced by a movement of the carriage (17) and the injection system (18, 19) towards the injection moulding mould (11).

5. The machine according to one of the preceding claims, wherein the injection moulding mould (11) is constructed with hot-runner technology and comprises a pneumatic shutter system.

6. The machine according to one of the preceding claims, wherein the stretching-blowing mould (21) comprises at least two separate parts, movable between a closed position, in which a stretching-blowing process is performed, and an open position, in which the containers produced are extracted, the stretching-blowing station (20) comprising a system (24) for actuating the stretching-blowing mould (21) configured for adapting an opening stroke and a closing stroke of the separate parts according to the dimensions of the stretching-blowing mould (21) and a number of cavity (22) which it comprises.

7. The machine according to one of the preceding claims, wherein the stretching-blowing station (20) comprises a plurality of blowing valves with discharge air recovery, for thermal energy recovery.

8. The machine according to one of the preceding claims, comprising a station (50) for conditioning the parisons positioned between the injection station (10) and the stretching-blowing station (20).

9. The machine according to claim 8, wherein the conditioning station (50) comprises a conditioning mould (51) comprising a plurality of female elements (52) designed to rise towards the parisons (2) and a plurality of male elements (53) designed to lower towards the parisons (2) whilst the parisons are kept at a transfer height, the station (50) also comprising a first unit (55) for carrying the female elements (52) and a second unit (56) for carrying the male elements (53), the first (55) and second (56) carrier units being movable towards a contact crosspiece (54) located at the above-mentioned transfer height of the parisons (2) and away from the contact crosspiece (54) respectively, the carrier units (55, 56) making contact against the contact crosspiece (54) in such a way that the female elements (52) and the male elements (53) move respectively to wrap around and introduce into the parisons (2) without transmitting to them deforming forces, in such a way as to carry out the thermal conditioning of the parisons (2) to impart an optimum temperature profile for the subsequent blowing process.

10. The machine according to claim 9, wherein the first and second carrier units are moved pneumatically.

11. The machine according to one of the preceding claims, comprising a plurality of carriages (42), each comprising two parts (43a, 43b) coupled and which can be separated between which the parisons (2) or the containers remain clamped, the carriages being movable in a straight line during a forward stroke along the longitudinal direction (D1), from the injection station (10) to the unloading station (40) and during a return stroke along a parallel and opposite path, a linear movement of the parisons being performed by the carriages.

12. The machine according to one of the preceding claims, wherein the injection station (10), the stretching-blowing station (20) and/or the parisons transport system (30) and/or the station (40) for unloading the containers obtained are actuated electrically.

13. The machine according to one of the preceding claims, wherein the station (40) for unloading the containers comprises a conveyor belt (41) with a palletising end-of-line.

## Patentansprüche

1. Maschine zum Formen, Ziehen und Blasformen von Behältern aus entsprechenden Vorformlingen aus einem thermoplastischen Material, insbesondere PET, wobei die Maschine umfasst:
- eine Station (10) zum Einspritzen von geschmolzenem thermoplastischem Material, um die Vorformlinge (2) zu erhalten, die nebeneinander nach einer Richtung (D2) angeordnet sind, die quer zu einer Hauptausdehnungslängsrichtung (D1) der Maschine verläuft, wobei mindestens eine Form zum Spritzgießen (11) verwendet wird, umfassend eine Plastifizier-Einspritzeinheit (12);
- eine Station (20) zum Streckblasen der nebeneinander nach einer Richtung (D2) angeordneten Vorformlinge, versehen mit mindestens einer Streckblasform (21), aufweisend eine Vielzahl an Formungshohlräumen (22), ein jeder für einen entsprechenden Vorformling (2), nebeneinander angeordnet nach einer Querrichtung (D2), wobei die Streckblasform (21) bewegbar ist, um zyklisch eine geschlossene Formkonfiguration und eine offene Formkonfiguration einzunehmen, wobei die Streckblasstation (20) mindestens eine Streckstange (23) für jeden Formungshohlraum (22) umfasst, die bewegbar ist, um progressiv in einen entsprechenden Vorformling (2) eingeführt zu werden, positioniert in der Streckblasform (21), um den Vorformling axial zu verformen und einen entsprechenden Behälter zu erhalten;
- ein System (30) zum Transportieren der Vorformlinge (2), die im Einspritzabschnitt (10) ausgebildet wurden, um die Vorformlinge (2) nacheinander von der Einspritzstation (10) zur Streckblasstation (20) zuzuführen, und
- eine Station (40) zum Abladen der erhaltenen Behälter,
wobei die Stationen zum Einspritzen (10), Streckblasen (20) und Abladen der Behälter (40) jeweils so positioniert sind, dass die Maschine eine lineare Ausdehnung entlang der Längsrichtung (D1) und eine lineare Bewegung der Vorformlinge (2) zwischen den Stationen aufweist, wobei die Maschine **dadurch gekennzeichnet ist, dass** die Einspritzgießform (11) je nach der Größe der herzustellenden Vorformlinge (2) austauschbar ist und die Streckblasform (21) je nach den Abmessungen der herzustellenden Behälter austauschbar ist.

2. Maschine nach Anspruch 1, wobei die Plastifizier-Einspritzeinheit (12) ein System zum Laden des thermoplastischen Materials in die Einspritzgießform (11) umfasst, das in der Lage ist, die Menge an thermoplastischem Material, die in die Einspritzgießform (11) einzuführen ist, zu ermitteln und entsprechend den Formungsdruck nach der Größe der Vorformlinge (2) zu regeln.

3. Maschine nach Anspruch 1 oder 2, wobei die Plastifizier-Einspritzeinheit (12) in der Höhe zwischen einer ersten und einer zweiten Endposition bewegbar ist, sodass sich der Einspritzgießform (11) entsprechend dem Format der Vorformlinge (2) angepasst werden kann, wobei die Einspritzstation (10) selbstregulierende Mittel umfasst, die ausgelegt sind, um eine automatische Anpassung einer Vielzahl an Formungsparametern während einer anfänglichen Einrichtung der Maschine (1) zu betätigen.

4. Maschine nach einem der vorhergehenden Ansprüche, umfassend ein System (18, 19) zum Einspritzen von thermoplastischem Material, umfassend eine Schraube (19), die sich in einer Einspritzleitung (18) dreht, um in die Einspritzgießform (11) einen ersten Abschnitt des Materials, das für einen Formungszyklus notwendig ist, einzuführen, und einen Wagen (17), der das Einspritzsystem (18, 19) trägt und relativ zur Einspritzgießform (11) zwischen einer angenäherten Position und einer entfernten Position und umgekehrt bewegbar ist, sowie einen zweiten Abschnitt des Materials, das notwendig ist, um eine Einführung des Materials in die Einspritzgießform (11) zu vervollständigen, das mittels einer Bewegung des Wagens (17) und des Einspritzsystems (18, 19) hinführend zur Einspritzgießform (11) eingeführt wird.

5. Maschine nach einem der vorhergehenden Ansprüche, wobei die Einspritzgießform (11) mit Heißkanaltechnik hergestellt ist und ein pneumatisches Absperrschiebersystem umfasst.

6. Maschine nach einem der vorhergehenden Ansprüche, wobei die Streckblasform (21) mindestens zwei separate Teile umfasst, die zwischen einer geschlossenen Position, in der ein Streckblasverfahren durchgeführt wird, und einer offenen Position, in der die hergestellten Behälter herausgenommen werden, bewegbar sind, wobei die Streckblasstation (20) ein System (24) umfasst, um die Streckblasform (21) zu betätigen, ausgelegt, um einen Öffnungshub und einen Schließhub der separaten Teile je nach den Abmessungen der Streckblasform (21) und einer Zahl an Hohlräumen (22), die enthalten sind, anzupassen.

7. Maschine nach einem der vorhergehenden Ansprüche, wobei die Streckblasstation (20) eine Vielzahl an Blasventilen mit Rückgewinnung der Ablassluft zur Rückgewinnung der Wärmeenergie umfasst.

8. Maschine nach einem der vorhergehenden Ansprüche, umfassend eine Station (50) zum Aufbereiten der zwischen der Einspritzstation (10) und der Blasformstation (20) positionierten Vorformlinge.

9. Maschine nach Anspruch 8, wobei die Aufbereitungsstation (50) eine Aufbereitungsform (51) umfasst, umfassend eine Vielzahl an Nutelementen (52), ausgelegt, um sich hinführend zu den Vorformlingen (2) nach oben zu bewegen, und eine Vielzahl an Federelementen (53), ausgelegt, um sich hinführend zu den Vorformlingen (2) nach unten zu bewegen, während die Vorformlinge auf einer Transferhöhe gehalten werden, wobei die Station (50) auch eine erste Einheit (55) umfasst, um die Nutelemente (52) zu tragen, und eine zweite Station (56), um die Federelemente (53) zu tragen, wobei die erste (55) und die zweite (56) Trägereinheit jeweils hinführend zu einem Kontaktkreuzstück (54) bewegbar sind, das sich auf der genannten Transferhöhe der Vorformlinge (2) befindet, und wegführend vom Kontaktkreuzstück (54), wobei die Trägereinheiten (55, 56) zum Kontaktkreuzstück (54) einen Kontakt herstellen, sodass die Nutelemente (52) und die Federelemente (53) sich jeweils bewegen, um sich zu umhüllen und in die Vorformlinge (2) eingeführt zu werden, ohne auf diese verformende Kräfte zu übertragen, sodass die thermische Aufbereitung der Vorformlinge (2) durchgeführt wird, um ein optimales Temperaturprofil für den nachfolgenden Blasprozess zu verleihen.

10. Maschine nach Anspruch 9, wobei die erste und die zweite Trägereinheit pneumatisch bewegt werden.

11. Maschine nach einem der vorhergehenden Ansprüche, umfassend eine Vielzahl an Wagen (42), von denen ein jeder zwei gekuppelte Teile (43a, 43b) umfasst, die getrennt werden können, zwischen denen die Vorformlinge (2) oder die Behälter eingespannt bleiben, wobei die Wagen in einer geraden Linie während eines Vorwärtshubs entlang der Längsrichtung (D1) von der Einspritzstation (10) zur Abladestation (40) und während eines Rückwärtshubs entlang eines parallelen und entgegengesetzten Wegs bewegbar sind, wobei von den Wagen eine lineare Bewegung der Vorformlinge durchgeführt wird.

12. Maschine nach einem der vorhergehenden Ansprüche, wobei die Einspritzstation (10), die Streckblasstation (20) und/oder das Transportsystem der Vorformlinge (30) und/oder die Station (40) zum Abladen der erhaltenen Behälter elektrisch betätigt werden.

13. Maschine nach einem der vorhergehenden Ansprüche, wobei die Station (40) zum Abladen der Behälter ein Förderband (41) mit einer Palettierung am Ende der Linie umfasst.

## Revendications

1. Machine pour mouler, étirer et mouler par soufflage des récipients obtenus à partir de préformes correspondantes en matière thermoplastique, en particulier en PET, la machine comprenant :
- un poste (10) servant à injecter une matière thermoplastique en fusion pour obtenir les préformes (2) placées côte à côte selon une direction (D2) transversale à une direction longitudinale (D1) d'extension principale de la machine, en utilisant au moins un moule pour le moulage par injection (11) comprenant une unité de plastification-injection (12);
- un poste (20) d'étirage-soufflage des préformes, placées côte à côte selon une direction (D2), pourvu d'au moins un moule d'étirage-soufflage (21) comportant une pluralité de cavités de moulage, (22) chacune pour une préforme (2) correspondante, placées côte à côte selon une direction transversale (D2), le moule d'étirage-soufflage (21) étant mobile pour adopter cycliquement une configuration de moule fermé et une configuration de moule ouvert, le poste d'étirage-soufflage (20) comprenant au moins une tige d'étirement (23), pour chaque cavité de moulage (22), mobile pour s'introduire progressivement à l'intérieur de la préforme (2) relative positionnée dans le moule d'étirage et soufflage (21), pour déformer axialement la préforme pour obtenir un récipient correspondant ;
- un système (30) pour transporter les préformes (2) réalisées dans la section d'injection (10) pour alimenter en succession les préformes (2) du poste d'injection (10) au poste d'étirage-soufflage (20) ; et
- un poste (40) servant à décharger les récipients obtenus ;
les postes d'injection (10), d'étirage-soufflage (20) et de déchargement des récipients (40) étant relativement positionnés de manière à ce que la machine comporte une extension linéaire le long de la direction longitudinale (D1) et un mouvement linéaire des préformes (2) entre les postes, la machine étant **caractérisée en ce que** le moule de moulage par injection (11) est interchangeable selon les dimensions des préformes (2) à fabriquer et le moule d'étirage-soufflage (21) est interchangeable selon les dimensions des récipients à fabriquer.

2. Machine selon la revendication 1, dans laquelle l'unité de plastification-injection (12) comprend un système destiné à charger la matière thermoplastique dans le moule de moulage par injection (11) pouvant déterminer la quantité de matière thermoplastique à introduire dans le moule de moulage par injection (11) et donc doser la pression de moulage selon les dimensions des préformes (2).

3. Machine selon la revendication 1 ou 2, dans laquelle l'unité de plastification-injection (12) est mobile en hauteur entre une première et une seconde position d'extrémité de manière à s'adapter au moule de moulage par injection (11) correspondant au format des préformes (2), le poste d'injection (10) comprenant des moyens d'autoréglage conçus pour actionner une adaptation automatique d'une pluralité de paramètres de moulage pendant un paramétrage initial de la machine (1) .

4. Machine selon l'une quelconque des revendications précédentes, comprenant un système (18, 19) servant à injecter de la matière thermoplastique comprenant une vis (19) tournant à l'intérieur d'un conduit d'injection (18) pour introduire dans le moule de moulage par injection (11) une première partie de la matière nécessaire pour un cycle de moulage et un chariot (17), supportant le système d'injection (18, 19), mobile par rapport au moule de moulage par injection (11) entre une position proche et une position d'éloignement et vice versa, une seconde partie de la matière nécessaire pour conclure une introduction de la matière dans le moule de moulage par injection (11) étant introduite par un mouvement du chariot (17) et du système d'injection (18, 19) vers le moule de moulage par injection (11).

5. Machine selon l'une des revendications précédentes, dans laquelle le moule de moulage par injection (11) est construit avec la technologie à canaux chauffants et comprend un système d'obturation pneumatique.

6. Machine selon l'une des revendications précédentes, dans laquelle le moule d'étirage-soufflage (21) comprend au moins deux parties séparées, mobiles entre une position fermée, dans laquelle un processus d'étirage-soufflage est réalisé, et une position d'ouverture, dans laquelle les récipients produits sont extraits, le poste d'étirage-soufflage (20) comprenant un système (24) servant à actionner le moule d'étirage-soufflage (21) configuré pour adapter une course d'ouverture et une course de fermeture des parties séparées selon les dimensions du moule d'étirage-soufflage (21) et du nombre de cavités (22) qu'il comporte.

7. Machine selon l'une des revendications précédentes, dans laquelle le poste d'étirage-soufflage (20) comprend une pluralité de vannes de soufflage avec récupération de l'air de décharge, pour la récupération d'énergie thermique.

8. Machine selon l'une des revendications précédentes, comprenant un poste (50) servant au conditionnement des préformes positionnées entre le poste d'injection (10) et le poste d'étirage-soufflage (20).

9. Machine selon la revendication 8, dans laquelle le poste de conditionnement (50) comprend un moule de conditionnement (51) comprenant une pluralité d'éléments femelles (52) conçus pour se redresser vers les préformes (2) et une pluralité d'éléments mâles (53) conçus pour s'abaisser vers les préformes (2) pendant que les préformes sont maintenues à une hauteur de transfert, le poste (50) comprenant aussi une première unité (55) servant à transporter les éléments femelles (52) et une seconde unité (56) servant à transporter les éléments mâles (53), les première (55) et seconde (56) unités de transport étant mobiles, respectivement, vers une traverse de contact (54) située en correspondance de la hauteur de transfert susmentionnée des préformes (2) et éloignées de la traverse de contact (54), les unités de transport (55, 56) se mettant en contact contre la traverse de contact (54) de manière à ce que les éléments femelles (52) et les éléments mâles (53) se déplacent respectivement pour s'entourer autour de et s'introduire dans les préformes (2) sans leur transmettre de forces de déformation de manière à effectuer le conditionnement thermique des préformes (2) pour conférer un profil de température optimal au processus de soufflage suivant.

10. Machine selon la revendication 9, dans laquelle les première et seconde unités de transport sont déplacées de façon pneumatique.

11. Machine selon l'une des revendications précédentes, comprenant une pluralité de chariots (42), chacun comprenant deux parties (43a, 43b) accouplées et pouvant être séparées, entre lesquelles les préformes (2) ou les récipients restent serrés, les chariots étant mobiles dans une ligne droite lors d'une course vers l'avant le long de la direction longitudinale (D1) du poste d'injection (10) vers le poste de déchargement (40) et lors d'une course de retour le long d'un parcours parallèle et opposé, un mouvement linéaire des préformes étant réalisé par les chariots.

12. Machine selon l'une des revendications précédentes, dans laquelle le poste d'injection (10), le poste d'étirage-soufflage (20) et/ou le système de transport (30) des préformes et/ou le poste (40) de déchargement des récipients obtenus sont actionnés électriquement.

13. Machine selon l'une des revendications précédentes, dans laquelle le poste (40) de déchargement des récipients comprend une courroie transporteuse (41) dotée d'une fin de ligne de palettisation.
